# EUROPEAN PATENT APPLICATION

(11) **EP 4 654 311 A1**
(43) Date of publication of application: **26.11.2025**
(21) Application number: 24752627.0
(22) Date of filing: 03.01.2024
(51) Int. Cl.: H01M 10/0525, H01M 4/13

(54) **ELECTROCHEMICAL DEVICE AND ELECTRONIC DEVICE**

(30) Priority: 10.02.2023 CN 202310106895
(71) Applicant: Ningde Amperex Technology Limited, Ningde, Fujian 352100 (CN)
(72) Inventor: ZHU, Shan, Ningde, Fujian 352100 (CN)
(74) Representative: Icosa
(86) International application number: PCT/CN2024/070368
(87) International publication number: WO 2024/164769

(57) **Abstract**

This application provides an electrochemical device and an electronic device. The electrochemical device includes an electrode assembly, where the electrode assembly includes an electrode sheet, and the electrode sheet includes a current collector and an active substance layer located on one or two surfaces of the current collector. The electrode assembly is a wound electrode assembly, and the electrode sheet includes an inner electrode sheet located on an inner layer of the electrode assembly and an outer electrode sheet located on an outer layer of the electrode assembly; or the electrode assembly is a laminated electrode assembly, the electrode assembly includes multiple electrode sheets stacked, the multiple electrode sheets include an inner electrode sheet located on an inner layer of the electrode assembly and an outer electrode sheet located on an outer layer of the electrode assembly. Based on a total length of the electrode sheet, a length of the inner electrode sheet accounts for 5% to 50% of the total length of the electrode sheet, and a length of the outer electrode sheet accounts for 5% to 50% of the total length of the electrode sheet. An electrochemical reaction impedance of the active substance layer of the inner electrode sheet is Rctᵢₙₙₑᵣ, an electrochemical reaction impedance of the active substance layer of the outer electrode sheet is Rctₒᵤₜₑᵣ, and Rctᵢₙₙₑᵣ/Rctₒᵤtₑᵣ ranges from 1.03 to 1.50. This application can improve kinetic performance and cycling performance.

## Description

### CROSS-REFERENCE TO RELATED APPLICATIONS

This application claims priority to Chinese Patent Application No. 202310106895.6, filed on February 10, 2023 and entitled "ELECTROCHEMICAL DEVICE AND ELECTRONIC DEVICE", which is incorporated herein by reference in its entirety.

### TECHNICAL FIELD

This application relates to the field of electrochemical technologies, and in particular, to an electrochemical device and an electronic device.

### BACKGROUND

Electrochemical devices (for example, lithium-ion batteries) are widely used in various fields. During charge and discharge of electrochemical devices, lithium ions are repeatedly intercalated and deintercalated between a positive electrode material and a negative electrode material.

In the electrode of the electrochemical device, due to the non-uniformity of temperature rise, there are significant differences in the degree of lithium deintercalation at different positions (head, middle, and tail) of the electrode sheet. A region with an excessively high temperature rise shows good kinetic performance and a high degree of lithium intercalation and deintercalation. This exerts a significant effect on the material stability of the positive electrode and a significant effect on lithium precipitation of the negative electrode.

### SUMMARY

This application provides an electrochemical device and an electronic device, which can improve high-temperature performance and increase energy density without compromising kinetic performance of the electrochemical device.

Some embodiments of this application provide an electrochemical device, including:
an electrode assembly, where the electrode assembly includes an electrode sheet, and the electrode sheet includes a current collector and an active substance layer located on one or two surfaces of the current collector.

The electrode assembly is a wound electrode assembly, and the electrode sheet includes an inner electrode sheet located on an inner layer of the electrode assembly and an outer electrode sheet located on an outer layer of the electrode assembly; or the electrode assembly is a laminated electrode assembly, the electrode assembly includes multiple electrode sheets stacked, the multiple electrode sheets include an inner electrode sheet located on an inner layer of the electrode assembly and an outer electrode sheet located on an outer layer of the electrode assembly. Based on a total length of the electrode sheet, a length of the inner electrode sheet accounts for 5% to 50% of the total length of the electrode sheet, and a length of the outer electrode sheet accounts for 5% to 50% of the total length of the electrode sheet. An electrochemical reaction impedance of the active substance layer of the inner electrode sheet is Rctᵢₙₙₑᵣ, an electrochemical reaction impedance of the active substance layer of the outer electrode sheet is Rctₒᵤₜₑᵣ, and Rctᵢₙₙₑᵣ/Rctₒᵤₜₑᵣ ranges from 1.03 to 1.50, ensuring both kinetic performance and stability.

In some embodiments, Rctᵢₙₙₑᵣ/Rctₒᵤₜₑᵣ ranges from 1.05 to 1.20, which can avoid the impact of polarization while ensuring kinetic performance and stability of the electrochemical device.

In some embodiments, the electrode sheet is a positive electrode sheet, and the active substance layer includes a positive electrode active substance and satisfies at least one of the following conditions:
(a) The positive electrode active substance includes a doping and coating element, a mass percentage W_{inner doping} of the doping and coating element of the positive electrode active substance in the inner electrode sheet is greater than a mass percentage W_{outer doping} of the doping and coating element of the positive electrode active substance in the outer electrode sheet, and a value of W_{inner doping}/W_{outer doping} is 1.01 to 1.15, thus improving stability.
(b) A gram capacity of the positive electrode active substance in the inner electrode sheet is less than a gram capacity of the positive electrode active substance in the outer electrode sheet, thus improving stability.

In some embodiments, at least one of the following conditions is satisfied:
(c) The gram capacity of the positive electrode active substance in the outer electrode sheet is 5 mAh/g to 20 mAh/g greater than the gram capacity of the positive electrode active substance in the inner electrode sheet, thus improving stability and avoiding polarization.
(d) The value of W_{inner doping}/W_{outer doping} is 1.03 to 1.1, thus further improving stability.

In some embodiments, the electrode sheet is a negative electrode sheet, and the active substance layer includes a negative electrode active substance and satisfies at least one of the following conditions:
(e) The negative electrode active substance includes a carbon material, and a value of (I_{D/}I_{G})_{inner layer} of the negative electrode active substance in the inner electrode sheet is less than a value of (I_{D}/I_{G})_{outer layer} of the negative electrode active substance in the outer electrode sheet, where a value of I_{D}/I_{G} is a peak intensity ratio of peak D to peak G in a Raman spectrum of the negative electrode active substance; and (I_{D}/I_{G})_{inner layer}/(I_{D}/I_{G})_{outer layer} ranges from 0.8 to 0.99, thus improving stability and avoiding polarization.
(f) A gram capacity of the negative electrode active substance in the inner electrode sheet is greater than a gram capacity of the negative electrode active substance in the outer electrode sheet, thus improving stability.

In some embodiments, (I_{D/}I_{G})_{inner layer}/(I_{D}/I_{G})_{outer layer} ranges from 0.9 to 0.95, thus improving stability and avoiding polarization.

In some embodiments, the active substance layer includes a conductive agent and/or a binder and satisfies at least one of the following conditions:
(g) A mass percentage W_{inner conductive agent} of the conductive agent in the active substance layer of the inner electrode sheet is less than a mass percentage W_{outer conductive agent} of the conductive agent in the active substance of the outer electrode sheet; and W_{outer conductive agent}-W_{inner conductive agent} ranges from 0.1% to 1%, such that the active substance layer of the outer electrode sheet exhibits better kinetic performance and the active substance layer of the inner electrode sheet exhibits higher stability, to adapt to their respective temperature rise conditions.
(h) A mass percentage W_{inner binder} of the binder in the active substance layer of the inner electrode sheet is greater than a mass percentage W_{outer binder} of the binder in the active substance of the outer electrode sheet, and W_{inner binder}-W_{outer binder} ranges from 0.1% to 1%, thus controlling stability and kinetic performance of the electrode sheets at different positions.

In some embodiments, the electrochemical device includes a positive electrode, the positive electrode includes a positive electrode active substance, and the positive electrode active substance includes at least one of lithium iron phosphate, lithium cobalt oxide, lithium nickel cobalt manganese oxide, lithium nickel cobalt aluminum oxide, or lithium manganese oxide; and/or
the electrochemical device includes a negative electrode, the negative electrode includes a negative electrode active substance, and the negative electrode active substance includes at least one of graphite, silicon, silicon alloy, or tin alloy.

In some embodiments, the active substance layer includes a conductive agent, and the conductive agent includes at least one of conductive carbon black, carbon nanotubes, conductive graphite, or graphene; and/or
the active substance layer includes a binder, and the binder includes at least one of polyvinylidene fluoride, Vinylidene fluoride-fluorinated olefin copolymer, polytetrafluoroethylene, sodium carboxymethyl cellulose, styrene-butadiene rubber, polyurethane, fluorinated rubber, or polyvinyl alcohol.

This application provides an electronic device including the electrochemical device according to any one of the above embodiments.

In some embodiments of this application, materials with different stabilities are used for electrode sheets at different positions in the electrochemical device, ensuring both stability and kinetic performance. The design of electrode sheets is optimized on a basis that electrode sheets at different positions require different material characteristics. The inner electrode sheet, which has a high temperature rise, highly requires material stability and is made of a more stable material, and the high temperature rise in return alleviates the polarization increase problem caused by the stable material, thus ensuring both kinetic performance and stability.

### BRIEF DESCRIPTION OF DRAWINGS

With reference to the accompanying drawings and the following specific embodiments, the above and other features, advantages, beneficial effects of the above embodiments of this application will become more apparent. Throughout the drawings, the same or similar reference signs indicate the same or similar elements. It should be understood that the drawings are illustrative and that the components and elements are not necessarily drawn to scale.
FIG. 1 is a schematic expanded view of an electrode sheet in a wound electrode assembly according to an embodiment of this disclosure.
FIG. 2 is a schematic stacking diagram of an electrode sheet in a laminated electrode assembly according to an embodiment of this disclosure.
FIG. 3 is a schematic expanded view of an electrode sheet in a wound electrode assembly according to an embodiment of this disclosure.
FIG. 4 is a schematic stacking diagram of an electrode sheet in a laminated electrode assembly according to an embodiment of this disclosure.

### DETAILED DESCRIPTION

The following describes some embodiments of this application in more detail. This application may be implemented in various forms. It should be noted that this application is not limited to these embodiments set forth herein. On the contrary, these embodiments are provided for a more thorough and complete understanding of this application.

Electrochemical devices, such as lithium-ion batteries, are widely used in various fields. In the electrode of the electrochemical device, due to the non-uniformity of temperature rise, there are significant differences in the degree of lithium deintercalation at different positions (head, middle, and tail) of the electrode sheet. A region with an excessively high temperature rise shows good kinetic performance and a high degree of lithium intercalation and deintercalation. This exerts a significant effect on the material stability of the positive electrode and a significant effect on lithium precipitation of the negative electrode.

Some embodiments of this application provide an electrochemical device, including an electrode assembly, where the electrode assembly includes an electrode sheet, and the electrode sheet includes a current collector and an active substance layer located on one or two surfaces of the current collector. The electrode assembly is a wound electrode assembly, and the electrode sheet includes an inner electrode sheet located on an inner layer of the electrode assembly and an outer electrode sheet located on an outer layer of the electrode assembly; or the electrode assembly is a laminated electrode assembly, the electrode assembly includes multiple electrode sheets stacked, the multiple electrode sheets include an inner electrode sheet located on an inner layer of the electrode assembly and an outer electrode sheet located on an outer layer of the electrode assembly. Based on a total length of the electrode sheet, a length of the inner electrode sheet accounts for 5% to 50% of the total length of the electrode sheet, and a length of the outer electrode sheet accounts for 5% to 50% of the total length of the electrode sheet. An electrochemical reaction impedance of the active substance layer of the inner electrode sheet is Rctᵢₙₙₑᵣ, an electrochemical reaction impedance of the active substance layer of the outer electrode sheet is Rctₒᵤₜₑᵣ, and Rctᵢₙₙₑᵣ/Rctₒᵤₜₑᵣ ranges from 1.03 to 1.50.

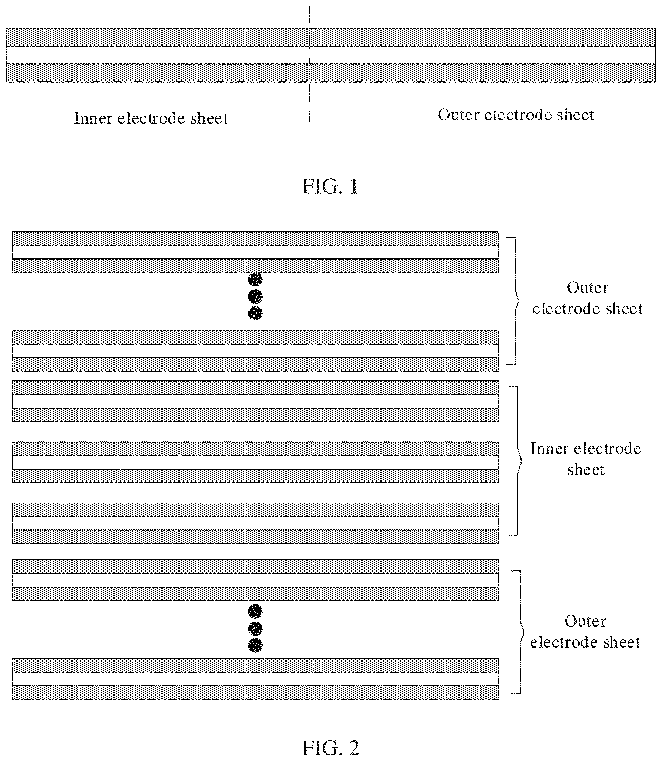

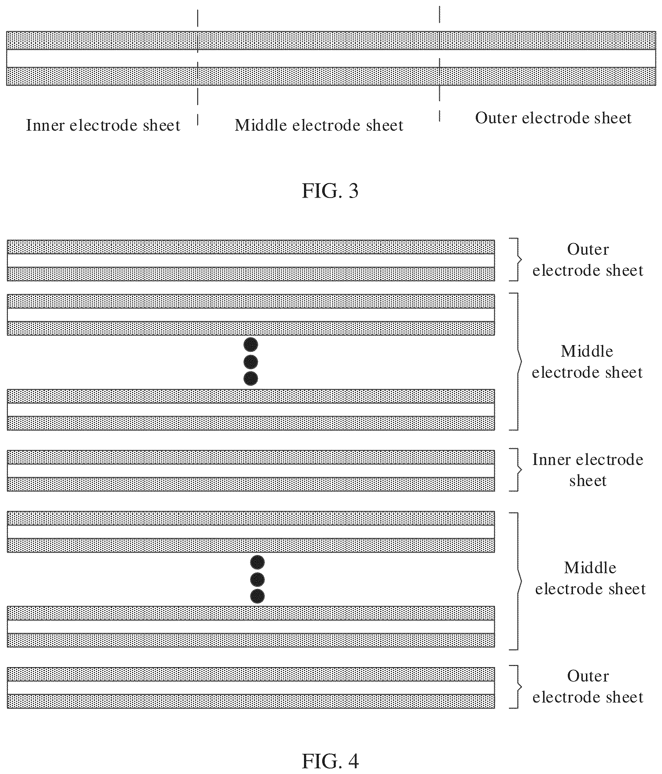

In some embodiments, the electrochemical device may be, for example, a lithium-ion battery, the electrode assembly may be, for example, a cell, and the electrode assembly may include, for example, a positive electrode sheet, a negative electrode sheet, and a separator located between the positive electrode sheet and the negative electrode sheet. The electrode sheet may be a positive electrode sheet or a negative electrode sheet. The current collector of the electrode sheet may be, for example, a copper foil or aluminum foil. For the electrode sheet, the inner electrode sheet is located in the electrode assembly, the outer electrode sheet is located on the outer layer of the electrode assembly, and there may also be a middle electrode sheet located between the inner electrode sheet and the outer electrode sheet. The electrode assembly may be wound or laminated. As shown in FIG. 1, for the wound electrode assembly, the inner electrode sheet and the outer electrode sheet may be different regions on an electrode sheet, with the inner electrode sheet located at the central part of the wound electrode assembly. As shown in FIG. 3, for the wound electrode assembly, the electrode may also include a middle electrode sheet located between the inner electrode sheet and the outer electrode sheet. In some embodiments, the electrode assembly is a wound electrode assembly, and the electrode sheet includes a first end and a second end along the length direction. The first end is located on an inner side of the electrode assembly relative to the second end. The inner electrode sheet is the portion of the electrode sheet extending a first length from the first end to the second end, and the outer electrode sheet is the portion of the electrode sheet extending a second length from the second end to the first end. The first end is located on an inner side of the electrode assembly relative to the second end, the first end may be the winding start end of the electrode sheet, and the second end may be the winding termination end of the electrode sheet. The first length may be 5% to 50% of the total length of the electrode sheet, and the second length may be 5% to 50% of the total length of the electrode sheet. As shown in FIG. 2, for the laminated electrode assembly, the inner electrode sheet and the outer electrode sheet may be multiple different electrode sheets. As shown in FIG. 4, for the laminated electrode assembly, there may also be a middle electrode sheet located between the inner electrode sheet and the outer electrode sheet. In some embodiments, the electrode assembly is a laminated electrode assembly, and the electrode assembly includes multiple electrode sheets stacked. The electrode sheets may have the same size. The inner electrode sheet is at least one electrode sheet stacked continuously and the inner electrode sheet includes an electrode sheet located at the middle position in the stacking direction. For example, if the number of electrode sheets is n (n, if odd, is rounded up), the electrode sheet at the middle position may be the (n/2)-th electrode sheet in the stacking direction. The outer electrode sheet includes a first part and a second part. The first part is at least one electrode sheet stacked continuously and the first part includes an electrode sheet located at the bottom in the stacking direction. The second part is at least one electrode sheet stacked continuously and the second part includes an electrode sheet located at the top in the stacking direction. Based on the total number of electrode sheets, the number of electrode sheets included in the inner electrode sheet accounts for 5% to 50% of the total number of electrode sheets, and the number of electrode sheets included in the outer electrode sheet accounts for 5% to 50% of the total number of electrode sheets. Compared to the outer electrode sheet, the inner electrode sheet has increased ion transmission paths. In some embodiments of this application, the electrochemical reaction impedance Rctᵢₙₙₑᵣ of the inner electrode sheet is greater than the electrochemical reaction impedance Rctₒᵤₜₑᵣ of the outer electrode sheet. This is because during the use of the electrochemical device, the temperature rises in different regions of the electrode sheet vary. The inner electrode sheet, which has a high temperature rise, highly requires the material of the active substance layer, that is, a more stable material. Therefore, a material with a larger electrochemical reaction impedance is used in the inner electrode sheet. In addition, the high temperature rise of the inner electrode sheet in return alleviates the polarization increase problem caused by the use of a stable material, thus ensuring both kinetic performance and stability. In some other embodiments, the electrochemical reaction impedance Rct_{middle} of the active substance layer of the middle electrode sheet is not less than Rctₒᵤₜₑᵣ, and Rctᵢₙₙₑᵣ is not less than Rct_{middle}. This is because the temperature rise of the middle electrode sheet is not lower than that of the outer electrode sheet and not higher than that of the inner electrode sheet. Therefore, the stability of the active substance layer in the middle electrode sheet needs to be higher than that of the active substance layer in the outer electrode sheet. In some embodiments, the stability of the active substance layer of the electrode sheet may decrease from the inner electrode sheet to the outer electrode sheet, with Rct_{middle} greater than Rctₒᵤₜₑᵣ and Rctᵢₙₙₑᵣ greater than Rct_{middle}.

In some embodiments, Rctᵢₙₙₑᵣ/Rctₒᵤₜₑᵣ ranges from 1.03 to 1.50, which prevents an excessively large difference between electrochemical reaction impedances of the active substance layers of the inner electrode sheet and the outer electrode sheet from causing a uniformity difference between different regions of the electrode sheet in the electrochemical device. In some embodiments, optionally, Rctᵢₙₙₑᵣ/Rctₒᵤₜₑᵣ ranges from 1.05 to 1.20, which can avoid the impact of polarization while ensuring kinetic performance and stability of the electrochemical device.

In some embodiments of this application, Rctᵢₙₙₑᵣ/Rct_{middle} ranges from 1.03 to 1.50, and optionally, Rctᵢₙₙₑᵣ/Rct_{middle} ranges from 1.05 to 1.20. In some embodiments, because the temperature rise of the inner electrode sheet is greater than that of the middle electrode sheet, the electrochemical reaction impedance of the active substance layer of the inner electrode sheet is greater than the electrochemical reaction impedance of the active substance layer of the middle electrode sheet, such that the stability of the material of the active substance layer of the electrode sheet varies with the position of the electrode sheet, thereby ensuring both kinetic performance and stability of the electrochemical device.

In some embodiments of this application, the electrode sheet is a positive electrode sheet, the active substance layer includes a positive electrode active substance, the positive electrode active substance includes a doping and coating element, a mass percentage W_{inner doping} of the doping and coating element of the positive electrode active substance in the inner electrode sheet is greater than a mass percentage W_{outer doping} of the doping and coating element of the positive electrode active substance in the outer electrode sheet, and a value of W_{inner doping}/W_{outer doping} is 1.01 to 1.15, optionally 1.03 to 1.1. In some embodiments, the positive electrode active substance includes a doping and coating element, and the doping and coating element can reduce the exposed active area of the positive electrode active substance. The mass percentage of the doping and coating element in the positive electrode active substance may be a percentage of the mass of the doping and coating element in the mass of the positive electrode active substance. The mass percentage W_{inner doping} of the doping and coating element of the positive electrode active substance in the inner electrode sheet is greater than the mass percentage W_{outer doping} of the doping and coating element of the positive electrode active substance in the outer electrode sheet. Therefore, the positive electrode active substance in the inner electrode sheet reduces the active area via the doping and coating element, improving material stability. In some embodiments, the doping and coating element in the positive electrode active substance may include, for example, one or both of Al and Mg. In some embodiments, the doping and coating elements are two elements with highest percentages, other than the main material elements, in the inductively coupled plasma test.

In some embodiments of this application, the electrode sheet is a positive electrode sheet, the active substance layer includes a positive electrode active substance, and a gram capacity of the positive electrode active substance in the inner electrode sheet is less than a gram capacity of the positive electrode active substance in the outer electrode sheet. In some embodiments, the gram capacity of the positive electrode active substance in the outer electrode sheet is 5 mAh/g to 20 mAh/g greater than the gram capacity of the positive electrode active substance in the inner electrode sheet. In some embodiments, the gram capacity of the positive electrode active substance used in the inner electrode sheet is less than the gram capacity of the positive electrode active substance in the outer electrode sheet, and thus positive electrode active substance in the inner electrode sheet has higher stability. In some embodiments, the gram capacity of the positive electrode active substance in the outer electrode sheet is controlled to be 5 mAh/g to 20 mAh/g greater than the gram capacity of the positive electrode active substance in the inner electrode sheet, to prevent an excessive difference between the positive electrode active substances in the inner electrode sheet and outer electrode sheet from causing significant polarization.

In some embodiments of this application, the electrode sheet is a negative electrode sheet, the active substance layer includes a negative electrode active substance, and the negative electrode active substance includes a carbon material. A value of I_{D}/I_{G} of the negative electrode active substance in the inner electrode sheet is denoted as (I_{D}/I_{G})_{inner layer}, a value of I_{D}/I_{G} of the negative electrode active substance in the outer electrode sheet is denoted as (I_{D}/I_{G})_{outer layer}, and (I_{D}/I_{G})_{inner layer} is less than (I_{D}/I_{G})_{outer layer}. The value of I_{D}/I_{G} is a peak intensity ratio of peak D to peak G in a Raman spectrum of the negative electrode active substance; and (I_{D/}I_{G})_{inner layer}/(I_{D}/I_{G})_{outer layer} ranges from 0.8 to 0.99, optionally from 0.9 to 0.95.

In some embodiments of this application, the electrode sheet is a negative electrode sheet, the active substance layer includes a negative electrode active substance, and a gram capacity of the negative electrode active substance in the inner electrode sheet is greater than a gram capacity of the negative electrode active substance in the outer electrode sheet. In some embodiments, the negative electrode active substance may include a carbon material, such as graphite. The negative electrode material is different from the positive electrode material. Using graphite as an example, much coated graphite indicates good kinetic performance and low gram capacity. When a negative electrode active substance with low kinetic performance is used in the inner electrode sheet, the coating amount of the negative electrode active substance is small and the gram capacity is high.

In some embodiments of this application, the active substance layer includes a conductive agent and/or a binder. A mass percentage W_{inner conductive agent} of the conductive agent in the active substance layer of the inner electrode sheet is less than a mass percentage W_{outer conductive agent} of the conductive agent in the active substance of the outer electrode sheet; and W_{outer conductive agent}-W_{inner conductive agent} ranges from 0.1% to 1%. In some embodiments, adding a conductive agent to the active substance layer can enhance the kinetic performance of the active substance layer. Therefore, in some embodiments, the mass percentage of the conductive agent in the active substance layer of the inner electrode sheet is lower, and the mass percentage of the conductive agent in the active substance layer of the outer electrode sheet is higher, such that the active substance layer of the outer electrode sheet exhibits better kinetic performance and the active substance layer of the inner electrode sheet exhibits higher stability, to adapt to their respective temperature rise conditions.

In some embodiments of this application, a mass percentage W_{inner binder} of the binder in the active substance layer of the inner electrode sheet is greater than a mass percentage W_{outer binder} of the binder in the active substance of the outer electrode sheet, and W_{inner binder}-W_{outer binder} ranges from 0.1% to 1%. In some embodiments, a smaller mass percentage of the binder indicates better kinetic performance but worse stability. The mass percentage of the binder in the active substance layer is adjusted to control stability and kinetic performance of the electrode sheets at different positions. In some embodiments, W_{inner binder}-W_{outer binder} ranges from 0.1% to 1%, such that there is a certain difference between the mass percentages of the binders in the active substance layers of the inner electrode sheet and the outer electrode sheet, but the difference is not too large, avoiding that a too large difference causes deterioration of uniformity of electrode sheets.

In some embodiments of this application, the electrochemical device includes a positive electrode, the positive electrode includes a positive electrode active substance, and the positive electrode active substance includes at least one of lithium iron phosphate, lithium cobalt oxide, lithium nickel cobalt manganese oxide, lithium nickel cobalt aluminum oxide, or lithium manganese oxide.

In some embodiments of this application, the electrochemical device includes a negative electrode, the negative electrode includes a negative electrode active substance, and the negative electrode active substance includes at least one of graphite, silicon, silicon alloy, or tin alloy.

In some embodiments of this application, the active substance layer includes a conductive agent, and the conductive agent includes at least one of conductive carbon black, carbon nanotubes, conductive graphite, or graphene.

In some embodiments of this application, the active substance layer includes a binder, and the binder includes at least one of polyvinylidene fluoride, vinylidene fluoride-fluorinated olefin copolymer, polytetrafluoroethylene, sodium carboxymethyl cellulose, styrene-butadiene rubber, polyurethane, fluorinated rubber, or polyvinyl alcohol.

In some embodiments of this application, the electrochemical device further includes an electrolyte, and the electrolyte includes at least one of polynitrile compound or lithium difluorophosphate. Polynitrile compound can form a stable SEI (solid electrolyte interphase) film with the positive electrode material, thereby improving cycling performance and safety of the electrochemical device. The addition of lithium difluorophosphate can improve cycling performance and high-temperature storage performance of the electrochemical device.

In some embodiments of this application, polynitrile compound includes at least one of succinonitrile, adiponitrile, ethylene glycol bis(propanenitrile) ether, 1,3,6-hexanetrinitrile, 1,2,6-hexanetrinitrile, or 1,2,3-tris(2-cyanoethoxy)propane.

In some embodiments of this application, the mass percentage of polynitrile compound in the electrolyte is 1%-15%. In some embodiments, when the mass percentage of polynitrile compound in the electrolyte is lower than 1%, the improvement effect on cycling performance or safety may not be significant due to the low percentage. When the mass percentage of polynitrile compound in the electrolyte is higher than 15%, it may undergo a reduction reaction with the negative electrode active substance layer, and the reduction reaction products may destroy the SEI film of the negative electrode.

In some embodiments, the mass percentage of lithium difluorophosphate in the electrolyte is 0.001%-1%.

In some embodiments, the electrolyte includes a lithium salt and a non-aqueous solvent.

In some embodiments, the lithium salt is selected from one or more of LiPF₆, LiBF₄, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, or lithium difluoroborate. For example, LiPF₆ is selected as the lithium salt because it has a high ionic conductivity and can improve cycling performance.

In some embodiments, the non-aqueous solvent may be a carbonate compound, a carboxylic acid ester compound, an ether compound, another organic solvent, or a combination thereof.

The carbonate compound may be a linear carbonate compound, a cyclic carbonate compound, or a combination thereof.

Examples of the linear carbonate compound include diethyl carbonate (DEC), dimethyl carbonate (DMC), dipropyl carbonate, methyl propyl carbonate, ethyl propyl carbonate, methyl ethyl carbonate (EMC), and a combination thereof. Examples of the cyclic carbonate compound include ethylene carbonate (EC), propylene carbonate (PC), butylene carbonate, vinyl ethylene carbonate, or a combination thereof. Examples of the carboxylic acid ester compound include ethyl acetate, n-propyl acetate, butyl acetate, methyl propionate, ethyl propionate, propyl propionate, γ-butyrolactone, decanolactone, pentanolactone, methyl valerolactone, caprolactone, or a combination thereof.

Examples of the ether compound include dibutyl ether, tetraglyme, diglyme, 1,2-dimethoxyethane, 1,2-diethoxyethane, ethoxy methoxyethane, 2-methyltetrahydrofuran, tetrahydrofuran, or a combination thereof.

Examples of the another organic solvent include dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, or a combination thereof.

In some embodiments, a separator is provided between the positive electrode sheet and the negative electrode sheet. The separator includes at least one of polyethylene, polypropylene, polyvinylidene fluoride, polyethylene glycol terephthalate, polyimide, or aramid. For example, polyethylene is at least one selected from high-density polyethylene, low-density polyethylene, or ultrahigh-molecular-weight polyethylene. Especially, polyethylene and polypropylene have a good effect on preventing short circuits and can improve stability of a battery through a shutdown effect. In some embodiments, a thickness of the separator ranges from approximately 5 µm to 50 µm.

In some embodiments, the separator may further include a porous layer on the surface. The porous layer is disposed on at least one surface of the separator and includes inorganic particles and a binder, where the inorganic particles are selected from at least one of aluminum oxide, silicon dioxide, magnesium oxide, titanium oxide, hafnium dioxide, stannic oxide, cerium dioxide, nickel oxide, zinc oxide, calcium oxide, zirconium dioxide, yttrium oxide, silicon carbide, boehmite, aluminum hydroxide, magnesium hydroxide, calcium hydroxide, or barium sulfate. In some embodiments, a pore diameter of the separator ranges from approximately 0.01 µm to 1 µm. The binder in the porous layer is selected from at least one of polyvinylidene fluoride, vinylidene fluoride-hexafluoropropylene copolymer, polyamide, polyacrylonitrile, polyacrylic ester, polyacrylic acid, polyacrylate, sodium carboxymethyl cellulose, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode sheet.

In some embodiments, the electrochemical device includes a primary battery or a secondary battery. In some embodiments, the electrochemical device includes a lithium-ion battery but this application is not limited thereto.

Some embodiments of this application provide an electronic device including the foregoing electrochemical device. The electronic device in these embodiments of this application is not particularly limited, and may be any known electronic device used in the prior art. In some embodiments, the electronic device may include but is not limited to a notebook computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a lighting appliance, a toy, a game console, a clock, an electric tool, a flash lamp, a camera, or a large household battery.

To better describe the proposed solution of this application, the following provides specific solutions with reference to examples and comparative examples:

### Example 1

Preparation of positive electrode sheet: A positive electrode active substance lithium cobalt oxide (a material at 4.5 V with a gram capacity of 179 mAh/g), a conductive agent, and a binder polyvinylidene fluoride (PVDF) were dissolved in an N-methyl-2-pyrrolidone (NMP) solution at a weight ratio of 97.6:1.1:1.3, and stirred well to form a positive electrode slurry 1. A positive electrode active substance lithium cobalt oxide (a material at 4.5 V with a gram capacity of 181 mAh/g), a conductive agent, and a binder polyvinylidene fluoride (PVDF) were dissolved in an N-methyl-2-pyrrolidone (NMP) solution at a weight ratio of 97.6:1.1:1.3, and stirred well to form a positive electrode slurry 2. The positive electrode slurry 1 and the positive electrode slurry 2 were applied to a coating region 1 and a coating region 2 of an aluminum foil, respectively. The coating amount per unit area of the coating region 1 was 229 mg/1540.25 mm², and the coating amount per unit area of the coating region 2 was 224 mg/1540.25 mm². The electrode sheet width was 80 mm. The positive electrode slurry 1 was applied to a wound inner electrode sheet (that is, the head of the electrode sheet), and the positive electrode slurry 2 was applied to a wound outer electrode sheet (that is, the tail of the electrode sheet). The lengths of the inner electrode sheet and the outer electrode sheet each accounted for 50% of the total length of the positive electrode sheet. Drying, cold calendering, and slitting were performed to obtain the positive electrode sheet.

Preparation of negative electrode sheet: A negative electrode active substance artificial graphite (360 mAh/g), a conductive carbon, and a binder styrene-butadiene rubber were dissolved in deionized water at a weight ratio of 97.5:0.5:2, and stirred well to form a negative electrode slurry. A copper foil was used as a negative electrode current collector. The negative electrode slurry was applied to the negative electrode current collector with a coating weight of 120 mg/1540.25 mm² on a single surface. The electrode sheet width was 82 mm, and the electrode sheet length was 1505 mm. Drying, cold calendering, and slitting were performed to obtain a negative electrode sheet, and an impedance of a negative electrode active substance layer is 15 ohms.

Preparation of separator: Polyethylene (PE) with a thickness of 8 µm was used as a separator substrate, two sides of the separator substrate were each coated with a 2 µm aluminum oxide ceramic layer, and two sides of the ceramic layer were each coated with a 2.5 mg binder polyvinylidene fluoride (PVDF), followed by drying.

Preparation of electrolyte: Under an atmosphere with a water content of less than 10 ppm, lithium hexafluorophosphate and a non-aqueous organic solvent (a weight ratio of ethylene carbonate (EC) to propylene carbonate (PC) to polypropylene (PP) to diethyl carbonate (DEC)=1:1:1:1) were prepared into a basic electrolyte, where a concentration of LiPF₆ was 1.15 mol/L.

Preparation of lithium-ion battery: The positive electrode sheet, the separator, and the negative electrode plate were stacked in sequence, with the separator sandwiched between the positive electrode sheet and the negative electrode for separation, and were wound to obtain an electrode assembly. The electrode assembly was placed in an outer package aluminum-plastic film, and was dehydrated at 80°C, the electrolyte was injected, and packaging was performed, followed by processes such as formation, degassing, and cutting to obtain a lithium-ion battery.

### Examples 2 to 7

The difference between Example 2 and Example 7 lay in the preparation of the positive electrode sheet. In the positive electrode sheets used in Example 2 to Example 7, the mass percentages of doping and coating elements in the positive electrode active substances of the inner electrode sheets and the outer electrode sheets were different from the mass percentage of a doping and coating element of the positive electrode active substance in Example 1, thus resulting in different gram capacities. Specific parameters are shown in Table 1, while other preparation parameters were the same.

### Example 8

Preparation of positive electrode sheet: A positive electrode active substance lithium cobalt oxide (a material at 4.5 V with a gram capacity of 180 mAh/g), a conductive agent, and a binder polyvinylidene fluoride (PVDF) were dissolved in an N-methyl-2-pyrrolidone (NMP) solution at a weight ratio of 97.6:1.1:1.3, and stirred well to form a positive electrode slurry. The positive electrode slurry was applied to an aluminum foil with a coating thickness of 229 mg/1540.25 mm². The electrode sheet width was 80 mm, and the electrode sheet length was 1500 mm. Drying, cold calendering, and slitting were performed to obtain the positive electrode sheet.

### Preparation of negative electrode sheet

A negative electrode active substance artificial graphite **1,** a conductive carbon, and a binder styrene-butadiene rubber were dissolved in deionized water at a weight ratio of 97.5:0.5:2, and stirred well to form a negative electrode slurry 1. A negative electrode active substance artificial graphite 2, a conductive carbon, and a binder styrene-butadiene rubber were dissolved in deionized water at a weight ratio of 97.5:0.5:2, and stirred well to form a negative electrode slurry 2. A copper foil was used as a negative electrode current collector. The negative electrode slurry 1 and the negative electrode slurry 2 were applied to the negative electrode current collectors of the inner electrode sheet and the outer electrode sheet, with a coating weight of 120 mg/1540.25 mm² on a single surface. The electrode sheet width was 82 mm, and the electrode sheet length was 1505 mm. Drying, cold calendering, and slitting were performed to obtain a negative electrode sheet. The lengths of the inner electrode sheet and the outer electrode sheet each accounted for 50% of the total length of the negative electrode sheet, and the gram capacities of the artificial graphite 1 and the artificial graphite 2 were different.

Other preparation parameters were the same as those in Example 1.

### Examples 9 to 15

The difference between Examples 9 to 15 and Example 8 lay in the preparation of the negative electrode sheet. In the negative electrode sheets used in Example 9 to Example 15, the gram capacities of the negative electrode active substances in the inner electrode sheets and the outer electrode sheets were different from those in Example 8. Specific parameters are shown in Table 2, while other preparation parameters were the same.

### Examples 16 to 20

The difference between Examples 16 to 20 and Example 1 lay in the preparation of the positive electrode sheet. In the positive electrode sheets used in Examples 16 and 20, the mass percentages of the conductive agents and binders in the positive electrode active substance layers of the inner electrode sheets and the outer electrode sheets were different from those in Example 1. Specific percentages are shown in Table 3. In the positive electrode active substance layers of the inner electrode sheets and the outer electrode sheets in Table 3, except for the percentages (mass percentages) of the conductive agents and binders shown in Table 3, the rest were positive electrode active substances. The positive electrode active substances in the inner electrode sheets and the outer electrode sheets were the same as those in Example 1. Other preparation parameters were the same.

### Examples 21 to 25

The difference between Examples 21 to 25 and Example 8 lay in the preparation of the negative electrode sheet. In the negative electrode sheets used in Examples 21 and 25, the mass percentages of the conductive agents and binders in the negative electrode active substance layers of the inner electrode sheets and the outer electrode sheets were different from those in Example 8. Specific percentages are shown in Table 4. In the negative electrode active substance layers of the inner electrode sheets and the outer electrode sheets in Table 4, except for the percentages (mass percentages) of the conductive agents and binders shown in Table 4, the rest were negative electrode active substances. The negative electrode active substances in the inner electrode sheets and the outer electrode sheets were the same as those in Example 8. Other preparation parameters were the same.

### Comparative example 1

Preparation of positive electrode sheet: A positive electrode active substance lithium cobalt oxide (a material at 4.5 V with a gram capacity of 180 mAh/g), a conductive agent, and a binder polyvinylidene fluoride (PVDF) were dissolved in an N-methyl-2-pyrrolidone (NMP) solution at a weight ratio of 97.6:1.1:1.3, and stirred well to form a positive electrode slurry. The positive electrode slurry was applied to an aluminum foil with a coating thickness of 229 mg/1540.25 mm². The electrode sheet width was 80 mm, and the electrode sheet length was 1500 mm. Drying, cold calendering, and slitting were performed to obtain the positive electrode sheet.

Other preparation parameters were the same as those in Example 1.

### Comparative example 2

The difference between Comparative example 2 and Example 1 lay in the preparation of the positive electrode sheet. In the positive electrode sheet used in Comparative example 2, the mass percentages of doping and coating elements in the positive electrode active substances of the inner electrode sheet and the outer electrode sheet were different from the mass percentages of doping and coating elements of the positive electrode active substances in Example 1, thus resulting in different gram capacities. Specific parameters are shown in Table 1, while other preparation parameters were the same.

### Comparative examples 3 and 4

The difference between Comparative examples 3 and 4 and Example 8 lay in the preparation of the negative electrode sheet. In the negative electrode sheets used in Comparative examples 3 and 4, the gram capacities of the negative electrode active substances in the inner electrode sheets and the outer electrode sheets were different from the gram capacity of the negative electrode active substance in Example 8. Specific parameters are shown in Table 2, while other preparation parameters were the same.

### Performance test methods and results:

(1) Impedance test: The lithium-ion batteries were discharged to 50% SOC (state of charge) at 0.2C, and then disassembled to obtain positive and negative electrode sheets. The positive electrode sheets face the positive electrode sheets, and the negative electrode sheets face the negative electrode sheets, so as to assemble symmetric batteries. EIS test was conducted at 25°C. The active substance layers of inner electrode sheets and the outer electrode sheets of the positive and negative electrodes were tested to obtain impedance values Rctᵢₙₙₑᵣ and Rctₒᵤₜₑᵣ of the active substance layers of the inner electrode sheets and the outer electrode sheets of the positive and negative electrodes.
(2) Test for capacity retention rate after 500 cycles
   The lithium-ion batteries prepared in the examples and comparative examples were charged at 2C to 4.2 V at 45°C, constant-voltage charged to 0.05C, and discharged at 10C to 2.8 V. The discharge capacity of the first cycle was recorded. This process was repeated for 500 cycles, and the discharge capacity of the 500th cycle was recorded. The capacity retention rate after 500 cycles was calculated: Capacity retention rate after 500 cycles= (discharge capacity of the 500th cycle/discharge capacity of the first cycle) ×100%.
(3) Charging capability test

The lithium-ion batteries prepared in the examples and comparative examples were charged at various rates at 25°C. The charging rate was increased until lithium precipitation occurred. The maximum charging rate without lithium precipitation was recorded.

The parameters and performance test results of each example and comparative example are shown in Table 1 and Table 2.

### (4) Raman test

The cross-section of the negative electrode sheet was cut using ion polishing and then placed on a test platform of the Raman spectrometer for test after focusing. A range of 200 µm×500 µm was selected for test, and more than 20 points were tested at equal intervals within this range. The test range for each point was between 1000 cm⁻¹ and 2000 cm⁻¹. A peak appearing between 1320 cm⁻¹ and 1370 cm⁻¹ was recorded as peak D, and a peak appearing between 1570 cm⁻¹ and 1620 cm⁻¹ was recorded as peak G. The intensity ratio I_{D}/I_{G} for each point was calculated, and the average value of multiple points was taken as the final intensity ratio I_{D}/I_{G}. The inner electrode sheet and outer electrode sheet of the negative electrode sheet were tested separately to obtain (ID/IG)_{inner layer} and (ID/IG)_{outer layer}.

### (5) Cell energy density test

The actual thickness H of the lithium-ion battery was measured, and the actual volume V of the lithium-ion battery was calculated. The discharge capacity of the first cycle in the test for capacity retention rate after 500 cycles was C, and cell energy density=C/V.

**Table 1**

| | Positive electrode Rctᵢₙₙₑᵣ (ohm) | Positive electrode Rctₒᵤₜₑᵣ (ohm) | Positive electrode Rctᵢₙₙₑᵣ/Rctₒᵤₜₑᵣ | Positive electrode W_{inner doping} | Positive electrode W_{outer doping} | Positive electrode W_{inner doping}/W_{outer doping} | Inner electrode sheet gram capacity of positive electrode (mAh/g) | Outer electrode sheet gram capacity of positive electrode (mAh/g) | Cell energy density (Wh/L) | Charging capability (at 25°C without lithium precipitation) | Capacity retention rate after 500 cycles at 45°C |
|---|---|---|---|---|---|---|---|---|---|---|---|
| Comparative example 1 | 45 | 45 | 1 | 0.55% | 0.55% | 1 | 180 | 180 | 740 | 2.8C | 80% |
| Comparative example 2 | 60 | 38 | 1.58 | 0.578% | 0.49% | 1.18 | 167 | 188 | 735 | 2.6C | 78% |
| Example 1 | 45.8 | 44.5 | 1.03 | 0.554% | 0.545% | 1.02 | 179 | 181 | 744 | 2.9C | 82% |
| Example 2 | 46 | 44 | 1.05 | 0.556% | 0.54% | 1.03 | 178 | 182 | 746 | 2.9C | 83% |
| Example 3 | 48 | 43 | 1.12 | 0.567% | 0.53% | 1.07 | 177 | 183 | 752 | 3.1C | 85% |
| Example 4 | 49 | 41.5 | 1.18 | 0.566% | 0.52% | 1.09 | 176 | 185 | 758 | 3.3C | 87% |
| Example 5 | 49.2 | 41 | 1.2 | 0.568% | 0.515% | 1.10 | 173.5 | 185.5 | 755 | 3.2C | 84% |
| Example 6 | 51 | 40 | 1.28 | 0.571% | 0.51% | 1.12 | 173 | 186 | 750 | 3.0C | 83% |
| Example 7 | 58.5 | 39 | 1.5 | 0.585% | 0.509% | 1.15 | 168 | 187 | 746 | 2.8C | 82% |

| | | | | | | | | | | | |
|---|---|---|---|---|---|---|---|---|---|---|---|
| Note: The inner electrode sheet gram capacity of the positive electrode refers to the gram capacity of the positive electrode active substance in the inner electrode sheet, and the outer electrode sheet gram capacity of the positive electrode refers to the gram capacity of the positive electrode active substance in the outer electrode sheet. | | | | | | | | | | | |

As shown in Table **1,** in Examples 1 to 7, Rctᵢₙₙₑᵣ/Rctₒᵤₜₑᵣ ranges from 1.03 to 1.50, Rctᵢₙₙₑᵣ/Rctₒᵤₜₑᵣ of Comparative example 1 is **1,** and Rctᵢₙₙₑᵣ/Rctₒᵤₜₑᵣ of Comparative example 2 is 1.58. It can be seen that the cell energy densities and the capacity retention rates after 500 cycles at 45°C in Examples 1 to 7 are greater than those in Comparative examples 1 and 2, and charging capabilities in Examples 1 to 7 are greater than or equal to charging capabilities in Comparative examples 1 and 2. Therefore, it can be seen that when the positive electrode sheet of the electrochemical device satisfies that Rctᵢₙₙₑᵣ/Rctₒᵤₜₑᵣ ranges from 1.03 to 1.50, the cell energy density can be increased and cycling performance is improved while ensuring the charging capability. This may be because in Comparative example **1,** the electrochemical reaction impedance values Rct of the inner electrode sheet and outer electrode sheet of the positive electrode sheet are the same, and therefore the temperature rise of the inner electrode sheet of the positive electrode sheet is higher than that of the outer electrode sheet, resulting in reduced stability of the material of the inner electrode sheet. In Comparative example 2, Rctᵢₙₙₑᵣ/Rctₒᵤₜₑᵣ is too large and the impedance of the inner electrode sheet is too large, resulting in reduced charging capability, cycling performance, and energy density. Therefore, it is necessary to control Rctᵢₙₙₑᵣ/Rctₒᵤₜₑᵣ to range from 1.03 to 1.50.

As shown in Table **1,** in Examples 2 to 5, Rctᵢₙₙₑᵣ/Rctₒᵤₜₑᵣ ranges from 1.05 to 1.20. It can be seen that the energy density, charging capability, and cycle capacity retention rate of Examples 2 to 5 are optimal. Reasonably controlling the electrochemical reaction impedances of the inner electrode sheet and outer electrode sheet avoids the decline in kinetic performance and ensures energy density and cycling performance.

As shown in Table 1, the mass percentage W_{inner doping} of the doping and coating element of the positive electrode active substance in the inner electrode sheet and the mass percentage W_{outer doping} of the doping and coating element of the positive electrode active substance in the outer electrode sheet are controlled, thus controlling W_{inner doping}/W_{outer doping}. The mass percentage of the doping and coating element affects the gram capacity of the positive electrode active substance and the active area of the positive electrode active substance. Therefore, W_{inner doping}/W_{outer doping} is controlled, thus controlling a value of Rctᵢₙₙₑᵣ/Rctₒᵤₜₑᵣ.

**Table 2**

| | Negative electrode Rctᵢₙₙₑᵣ (ohm) | Negative electrode Rctₒᵤₜₑᵣ (ohm) | Negative electrode Rctᵢₙₙₑᵣ/R ctₒᵤₜₑᵣ | (I_{D}/I_{G})_{inner layer}/(I_{D}/I_{G}) outer layer | Inner electrode sheet gram capacity of negative electrode (mAh/g) | Outer electrode sheet gram capacity of negative electrode (mAh/g) | Cell energy density (Wh/L) | Charging capability (at 25°C without lithium precipitation) | Capacity retention rate after 500 cycles at 45°C |
|---|---|---|---|---|---|---|---|---|---|
| Comparative example 3 | 15 | 15 | 1 | 1 | 365 | 365 | 740 | 2.8C | 80% |
| Comparative example 4 | 19.7 | 12.3 | 1.6 | 0.75 | 370 | 359 | 738 | 2.3C | 78% |
| Example 8 | 15.2 | 14.8 | 1.03 | 0.99 | 365.4 | 364.7 | 743 | 2.9C | 82% |
| Example 9 | 15.3 | 14.6 | 1.05 | 0.97 | 365.8 | 364.5 | 746 | 2.9C | 83% |
| Example 10 | 15.5 | 14.5 | 1.07 | 0.95 | 366 | 364.3 | 747 | 3.0C | 84% |
| Example 11 | 15.7 | 14.3 | 1.10 | 0.93 | 366.5 | 364.1 | 746 | 3.1C | 85% |
| Example 12 | 15.8 | 14 | 1.13 | 0.9 | 366.8 | 362 | 745 | 3.0C | 84% |
| Example 13 | 16. | 13.5 | 1.2 | 0.87 | 367 | 361 | 744 | 2.9C | 83% |
| Example 14 | 16.9 | 13 | 1.3 | 0.84 | 368 | 360 | 743 | 2.8C | 82% |
| Example 15 | 18.9 | 12.6 | 1.5 | 0.8 | 369 | 359 | 742 | 2.8C | 81% |

| | | | | | | | | | |
|---|---|---|---|---|---|---|---|---|---|
| Note: The preparation parameters shown in Table 2 are the preparation parameters of the negative electrode sheet. The inner electrode sheet gram capacity of the negative electrode refers to the gram capacity of the negative electrode active substance in the inner electrode sheet, and the outer electrode sheet gram capacity of the negative electrode refers to the gram capacity of the negative electrode active substance in the outer electrode sheet. | | | | | | | | | |

As shown in Table 2, in Examples 8 to 15, the negative electrode sheets satisfy that Rctᵢₙₙₑᵣ/Rctₒᵤₜₑᵣ ranges from 1.03 to 1.50, Rctᵢₙₙₑᵣ/Rctₒᵤₜₑᵣ of Comparative example 3 is 1, and Rctᵢₙₙₑᵣ/Rctₒᵤₜₑᵣ of Comparative example 4 is 1.6. It can be seen that the cell energy densities and the capacity retention rates after 500 cycles at 45°C in Examples 8 to 15 are greater than those in Comparative examples 3 and 4, and charging capabilities in Examples 8 to 15 are greater than or equal to charging capabilities in Comparative examples 3 and 4. Therefore, it can be seen that when the negative electrode sheet of the electrochemical device satisfies that Rctᵢₙₙₑᵣ/Rctₒᵤₜₑᵣ ranges from 1.03 to 1.50, the cell energy density can be increased and cycling performance is improved while ensuring the charging capability.

As shown in Table 2, in Examples 9 to 13, the negative electrode sheets satisfy that Rctᵢₙₙₑᵣ/Rctₒᵤtₑᵣ ranges from 1.05 to 1.20. It can be seen that the energy densities, charging capabilities, and cycle capacity retention rates of Examples 9 to 13 are optimal. Reasonably controlling the electrochemical reaction impedances of the inner electrode sheet and outer electrode sheet of the negative electrode sheet avoids the decline in kinetic performance and ensures energy density and cycling performance.

As shown in Table 2, the gram capacity of the negative electrode active substance in the inner electrode sheet of the negative electrode and the gram capacity of the negative electrode active substance in the outer electrode sheet are controlled, thus controlling the value of Rctᵢₙₙₑᵣ/Rctₒᵤₜₑᵣ. It can be seen that this value is related to (ID/IG)_{inner layer}/(I_{D}/I_{G})_{outer layer} of the negative electrode sheet, where I_{D} is the peak intensity of peak D, representing defects in the C atom lattice, and I_{G} is the peak intensity of peak G, representing in-plane stretching vibrations of the sp2 hybridized C atoms. I_{D}/I_{G} reflects the defect concentration in the carbon atom crystal, and (I_{D/}I_{G})_{inner layer}/(I_{D}/I_{G})_{outer layer} reflects the ratio of the defect concentration of the negative electrode active substance in the inner electrode sheet to the defect concentration of the negative electrode active substance in the outer electrode sheet. A greater defect concentration indicates more carriers and a smaller electrochemical reaction impedance. Therefore, when (I_{D/}I_{G})_{inner layer}/(I_{D}/I_{G})_{outer layer} increases, Rctᵢₙₙₑᵣ/Rctₒᵤₜₑᵣ decreases.

**Table 3**

| | Rctᵢₙₙₑᵣ (ohm) | Rctₒᵤₜₑᵣ (ohm) | Rctᵢₙₙₑᵣ/ Rctₒᵤₜₑᵣ | Conductive agent percentage W_{inner conductive agent} of inner electrode sheet of positive electrode | Conductive agent percentage W_{outer conductive agent} of outer electrode sheet of positive electrode | W_{outer conductive agent}-W_{inner conductive agent} | Binder percentage W_{inner binder} of inner electrode sheet of positive electrode | Binder percentage W_{outer binder} of outer electrode sheet of positive electrode | W_{inner binder}-W_{outer binder} | Cell energy density (Wh/L) | Charging capability (at 25°C without lithium precipitation) | Capacity retention rate after 500 cycles at 45°C |
|---|---|---|---|---|---|---|---|---|---|---|---|---|
| Example 16 | 45.8 | 44 | 1.04 | 0.9% | 1% | 0.1% | 2% | 1.9% | 0.1% | 740 | 2.9C | 81% |
| Example 17 | 48.7 | 43.5 | 1.12 | 0.8% | 1.1% | 0.3% | 2.1% | 1.8% | 0.3% | 740 | 3.1C | 84% |
| Example 18 | 51.1 | 43 | 1.19 | 0.6% | 1.2% | 0.6% | 2.2% | 1.7% | 0.5% | 740 | 3.2C | 85% |
| Example 19 | 54.4 | 42.5 | 1.28 | 0.4% | 1.3% | 0.9% | 2.3% | 1.6% | 0.7% | 740 | 3.0C | 83% |
| Example 20 | 59.6 | 42 | 1.42 | 0.5% | 1.5% | 1% | 2.5% | 1.5% | 1% | 740 | 2.9C | 81% |

| | | | | | | | | | | | | |
|---|---|---|---|---|---|---|---|---|---|---|---|---|
| Note: The preparation parameters shown in Table 3 are the parameters of the positive electrode sheet, where the percentages of the conductive agent and binder are the mass percentages in the positive electrode active substance layer. | | | | | | | | | | | | |

As shown in Table 3, in Table 3 the percentages of the conductive agents or binders in the positive electrode active substance layers of the inner electrode sheet and outer electrode sheet are controlled, thus controlling Rctᵢₙₙₑᵣ/Rctₒᵤₜₑᵣ. The conductive agent can enhance conductivity and thus reduce electrochemical reaction impedance, and the binder, due to poor conductivity, increases electrochemical reaction impedance. As shown in Table 3, in Examples 16 to 20, W_{outer conductive agent}-Wᵢₙₙₑᵣ conductive agent ranges from 0.1% to 1%, and W_{inner binder}-W_{outer binder} ranges from 0.1% to 1%. In addition, Rctᵢₙₙₑᵣ/Rctₒᵤₜₑᵣ can be controlled between 1.03 to 1.5, thereby achieving good cell energy density, charging capability, and cycling performance.

**Table 4**

| | Rctᵢₙₙₑᵣ (ohm) | Rctₒᵤₜₑᵣ (ohm) | Rctᵢₙₙₑᵣ/ Rctₒᵤₜₑᵣ | Conductive agent percentage W_{inner conductive agent} of inner electrode sheet of negative electrode | Conductive agent percentage W_{outer conductive agent} of outer electrode sheet of negative electrode | W_{outer conductive agent}-W_{inner conductive agent} | Binder percentage W_{inner binder} of inner electrode sheet of negative electrode | Binder percentage W_{outer binder} of outer electrode sheet of negative electrode | W_{inner binder}-W_{outer binder} | Cell energy density (Wh/L) | Charging capability (at 25°C without lithium precipitation) | Capacity retention rate after 500 cycles at 45°C |
|---|---|---|---|---|---|---|---|---|---|---|---|---|
| Example 21 | 14.5 | 14 | 1.04 | 0.9% | 1% | 0.1% | 2% | 1.9% | 0.1% | 740 | 2.8C | 81% |
| Example 22 | 15 | 13.5 | 1.11 | 0.8% | 1.1% | 0.3% | 2.1% | 1.8% | 0.3% | 740 | 3.2C | 84% |
| Example 23 | 15.5 | 13 | 1.19 | 0.6% | 1.2% | 0.6% | 2.2% | 1.7% | 0.5% | 740 | 3.1C | 85% |
| Example 24 | 16 | 12.5 | 1.28 | 0.4% | 1.3% | 0.9% | 2.3% | 1.6% | 0.7% | 740 | 3.0C | 83% |
| Example 25 | 17 | 12 | 1.42 | 0.5% | 1.5% | 1 % | 2.5% | 1.5% | 1 % | 740 | 2.9C | 81% |

| | | | | | | | | | | | | |
|---|---|---|---|---|---|---|---|---|---|---|---|---|
| Note: The preparation parameters shown in Table 4 are the preparation parameters of the negative electrode sheet, where the percentages of the conductive agent and binder are the mass percentages in the negative electrode active substance layer. | | | | | | | | | | | | |

As shown in Table 4, in Table 4 the percentages of the conductive agents or binders in the negative electrode active substance layers of the inner electrode sheet and outer electrode sheet is controlled, thus controlling Rctᵢₙₙₑᵣ/Rctₒᵤₜₑᵣ. The conductive agent can enhance conductivity and thus reduce electrochemical reaction impedance, and the binder, due to poor conductivity, increases electrochemical reaction impedance. As shown in Table 4, in Examples 21 to 25, W_{outer conductive agent}-W_{inner conductive agent} ranges from 0.1% to 1%, and W_{inner binder}-W_{outer binder} ranges from 0.1% to 1%. In addition, Rctᵢₙₙₑᵣ/Rctₒᵤₜₑᵣ can be controlled between 1.03 to 1.5, thereby achieving good cell energy density, charging capability, and cycling performance.

The foregoing descriptions are merely preferred examples of this application and explanations of the technical principles used. Persons skilled in the art should understand that the related scope disclosed in this application is not limited to the technical solutions formed by a specific combination of the foregoing technical characteristics, and should also cover other technical solutions formed by any combination of the foregoing technical characteristics or their equivalent characteristics. For example, the technical solution formed by replacement between the foregoing features and technical features having similar functions disclosed in this application.

## Claims

1. An electrochemical device, comprising:
an electrode assembly, wherein the electrode assembly comprises an electrode sheet, and the electrode sheet comprises a current collector and an active substance layer located on one or two surfaces of the current collector;
wherein the electrode assembly is a wound electrode assembly, and the electrode sheet comprises an inner electrode sheet located on an inner layer of the electrode assembly and an outer electrode sheet located on an outer layer of the electrode assembly; or the electrode assembly is a laminated electrode assembly, the electrode assembly comprises multiple electrode sheets stacked, the multiple electrode sheets comprise an inner electrode sheet located on an inner layer of the electrode assembly and an outer electrode sheet located on an outer layer of the electrode assembly;
based on a total length of the electrode sheet, a length of the inner electrode sheet accounts for 5% to 50% of the total length of the electrode sheet, and a length of the outer electrode sheet accounts for 5% to 50% of the total length of the electrode sheet; and
an electrochemical reaction impedance of the active substance layer of the inner electrode sheet is Rctᵢₙₙₑᵣ, an electrochemical reaction impedance of the active substance layer of the outer electrode sheet is Rctₒᵤₜₑᵣ, and Rctᵢₙₙₑᵣ/Rctₒᵤₜₑᵣ ranges from 1.03 to 1.50.

2. The electrochemical device according to claim 1, wherein
Rctᵢₙₙₑᵣ/Rctₒᵤₜₑᵣ ranges from 1.05 to 1.20.

3. The electrochemical device according to claim 1, wherein the electrode sheet is a positive electrode sheet, and the active substance layer comprises a positive electrode active substance and satisfies at least one of the following conditions:
(a) the positive electrode active substance comprises a doping and coating element, a mass percentage W_{inner doping} of the doping and coating element of the positive electrode active substance in the inner electrode sheet is greater than a mass percentage W_{outer doping} of the doping and coating element of the positive electrode active substance in the outer electrode sheet, and a value of W_{inner doping}/W_{outer doping} is 1.01 to 1.15; or
(b) a gram capacity of the positive electrode active substance in the inner electrode sheet is less than a gram capacity of the positive electrode active substance in the outer electrode sheet.

4. The electrochemical device according to claim 3, wherein at least one of the following conditions is satisfied:
(c) the gram capacity of the positive electrode active substance in the outer electrode sheet is 5 mAh/g to 20 mAh/g greater than the gram capacity of the positive electrode active substance in the inner electrode sheet; or
(d) the value of W_{inner doping}/W_{outer doping} is 1.03 to 1.1.

5. The electrochemical device according to claim 1, wherein the electrode sheet is a negative electrode sheet, and the active substance layer comprises a negative electrode active substance and satisfies at least one of the following conditions:
(e) the negative electrode active substance comprises a carbon material, and a value of (ID/IG)_{inner layer} of the negative electrode active substance in the inner electrode sheet is less than a value of (I_{D}/I_{G})_{outer layer} of the negative electrode active substance in the outer electrode sheet, wherein a value of I_{D}/I_{G} is a peak intensity ratio of peak D to peak G in a Raman spectrum of the negative electrode active substance; and (I_{D}/I_{G})_{inner layer}/(I_{D}/I_{G})_{outer layer} ranges from 0.8 to 0.99; or
(f) a gram capacity of the negative electrode active substance in the inner electrode sheet is greater than a gram capacity of the negative electrode active substance in the outer electrode sheet.

6. The electrochemical device according to claim 5, wherein (ID/IG)_{inner layer}/(I_{D}/I_{G})_{outer layer} ranges from 0.9 to 0.95.

7. The electrochemical device according to claim **1,** wherein the active substance layer comprises a conductive agent and/or a binder and satisfies at least one of the following conditions:
(g) a mass percentage W_{inner conductive agent} of the conductive agent in the active substance layer of the inner electrode sheet is less than a mass percentage W_{outer conductive agent} of the conductive agent in the active substance layer of the outer electrode sheet; and W_{outer conductive agent}-Wᵢₙₙₑᵣ conductive agent ranges from 0.1% to 1%; or
(h) a mass percentage W_{inner binder} of the binder in the active substance layer of the inner electrode sheet is greater than a mass percentage W_{outer binder} of the binder in the active substance of the outer electrode sheet, and W_{inner binder}-W_{outer binder} ranges from 0.1% to 1%.

8. The electrochemical device according to claim 1, wherein
the electrochemical device comprises a positive electrode, the positive electrode comprises a positive electrode active substance, and the positive electrode active substance comprises at least one of lithium iron phosphate, lithium cobalt oxide, lithium nickel cobalt manganese oxide, lithium nickel cobalt aluminum oxide, or lithium manganese oxide; and/or
the electrochemical device comprises a negative electrode, the negative electrode comprises a negative electrode active substance, and the negative electrode active substance comprises at least one of graphite, silicon, silicon alloy, or tin alloy.

9. The electrochemical device according to claim 1, wherein
the active substance layer comprises a conductive agent, and the conductive agent comprises at least one of conductive carbon black, carbon nanotubes, conductive graphite, or graphene; and/or
the active substance layer comprises a binder, and the binder comprises at least one of polyvinylidene fluoride, vinylidene fluoride-fluorinated olefin copolymer, polytetrafluoroethylene, sodium carboxymethyl cellulose, styrene-butadiene rubber, polyurethane, fluorinated rubber, or polyvinyl alcohol.

10. An electronic device, comprising the electrochemical device according to any one of claims 1 to 9.
